# EUROPEAN PATENT APPLICATION

(11) **EP 2 667 498 A2**
(43) Date of publication of application: **27.11.2013**
(21) Application number: 13168832.7
(22) Date of filing: 23.05.2013
(51) Int. Cl.: H02M 1/00

(54) **Remote load bypass system**

(30) Priority: 23.05.2012 US 201213478310
(71) Applicant: General Electric Company, Schenectady, New York 12345 (US)
(72) Inventor: Gupta, Ranjan Kumar, Niskayuna, NY 12309 (US); Sihler, Christof Martin, Niskayuna, NY 12309 (US); Gunturi, Satish Sivarama, Niskayuna, NY 12309 (US); Schroeder, Stefan, Niskayuna, NY 12309 (US); Song Manguelle, Joseph, Houston, TX 77060 (US); Raju, Ravisekhar Nadimpalli, Niskayuna, NY 12309 (US); Datta, Rajib, Niskayuna, NY 12309 (US)
(74) Representative: Illingworth-Law, William Illingworth

(57) **Abstract**

A load bypass switch (22) enables continuous power to remote loads in the event of 1) failure of one or more remote loads, or 2) faults within the remote loads, within a dc power system. The bypass switch utilizes the passive components of the dc loads or inverters and therefore reduces overall component count. A black start method for the remote dc system uses the same passives present inside the loads/inverters and simultaneously uses some of the features of the bypass switch. A bypass-module-yard (72) uses multiple bypass switches (22) enabling continuous power to the remote loads in the event of failure of one or more power distribution cables (in-feed to the remote loads) located remotely in the dc system.

## Description

### BACKGROUND

This subject matter of this disclosure relates generally to control systems, and more particularly to a control system and method of control that can be easily integrated with a modular stacked DC (MSDC) topology for sub-sea applications.

Modular stacked DC converter architectures are well suited for sub-sea applications requiring transmission and distribution over long distances. Unlike other DC transmission options, wherein the DC transmission (link) voltage is controlled, i.e. maintained nearly constant, the DC transmission (link) current is controlled in a modular stacked DC converter. The MSDC architecture gets its name from the fact that the architecture uses several DC-DC/AC-DC/DC-AC converter modules stacked and connected in series on the DC side, both at the sending end and at the receiving end of the transmission link.

All subsea installations require control systems. Subsea control systems may consist of dozens or hundreds of low power consumers, e.g. electrically driven sensors for the physical displacements of valves. Direct current cables are the most economic choice for long distance power transmission because DC power transmission and distribution can fundamentally overcome the cable capacitance and reactive power issue associated with AC power delivery.

Direct current power transmission requires a subsea inverter, e.g. an inverter based on MSDC technology. An MSDC inverter, in addition to converting DC to AC, may keep a subsea busbar voltage constant by way of boosting the voltage at the end of the transmission line.

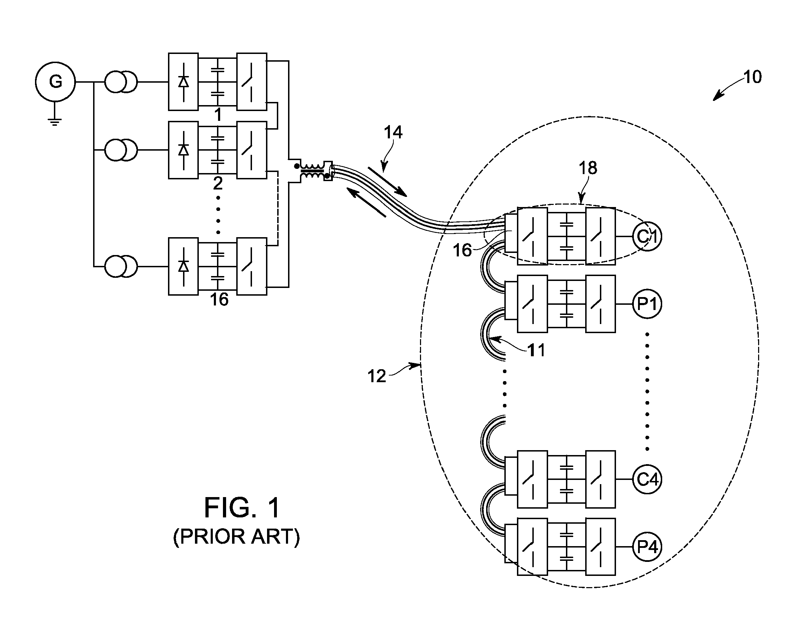

The loads at the remote subsea location of a subsea power transmission and distribution (T/D) system 10 that employs a MSDC architecture are connected in series 11 on the distribution side 12, such as illustrated in Figure 1. Such a topology is valid not only for a MSDC system, but for any system where the transmission line current 14 is controlled to be stiff, such as, for example, a classic line commutated HVDC system.

A load bypass switch 16, such as shown in Figure 1 may be required for each remote load and/or variable frequency drive (VFD) 18. Each load bypass switch 16 is connected in parallel to a respective remote load 18. The bypass switches 16 provide a bypass path to the transmission line current 14 in the event of open-circuit fault VFDs or loads 18 to ensure point-to-point power flow is maintained.

Bypass switches 16 ensure that continuous point-to-point power flow is maintained. Known systems and methods generally provide switching operations at best within a few milliseconds. Fast operation of the bypass switches 16 is desirable to ensure reliable protection against open-circuit fault transients.

In view of the foregoing, there is a need to provide a control system and method of control that can bypass a transmission current within a few microseconds. The system and method of control should be applicable to any current source based DC T&D architecture. The system and method of control should, for example, be capable of being easily integrated with a modular stacked DC (MSDC) topology for sub-sea applications.

### BRIEF DESCRIPTION

An exemplary embodiment of the disclosure is directed to a remote module bypass system. The exemplary embodiment further comprises a plurality of remote modules connected in series and receiving DC current in response to a DC transmission line current. A plurality of load bypass switches is configured such that each bypass switch is connected in parallel with a distinct and respective remote module selected from the plurality of remote modules and further such that each module is associated with a distinct and respective bypass switch. Each bypass switch provides a bypass path to a corresponding remote module DC current during an open-circuit load fault associated with the respective remote module. Each bypass switch comprises a coupled DC-choke and a thyristor over-voltage protection circuit integrated within and connected to the coupled DC-choke.

Another embodiment is directed to a remote module bypass switch comprising a DC-choke coupling a DC source current to one or more remote modules. A thyristor over-voltage protection circuit is integrated within and connected to the coupled DC-choke such that the coupled DC-choke and thyristor over-voltage protection circuit form a bypass current path to a remote module subsequent to a remote module open circuit fault.

Operation of the bypass switch for open circuit faults described above is just one example of protection using a bypass switch due to one type of fault which is open-circuit. However, the bypass switch can also be used in case of other faults that prevent point-to-point power delivery to other series connected loads. For example - a trip of the motor circuit breaker, or a compressor fault. In addition to fault handling, the bypass switch can also be activated from the control in order to intentionally bypass the loads. The intentional bypass can be due to several reasons such as tripping of a subsea inverter or any failure.

### DRAWINGS

The foregoing and other features, aspects and advantages of the invention are apparent from the following detailed description taken in conjunction with the accompanying drawings in which like characters represent like parts throughout the drawings, wherein:
Figure 1 is a simplified diagram illustrating a known sub-sea power transmission/distribution system with load bypass switches on the sub-sea side of the system;
Figure 2 illustrates one portion of a DC power transmission/distribution system that employs a load bypass switch according to one embodiment;
Figure 3 is a simplified diagram illustrating connection of the bypass switch within the coupled DC choke depicted in Figure 2;
Figure 4 illustrates the switching path resulting during operation of the load bypass switch depicted in Figures 2 and 3;
Figure 5 illustrates in more detail, a DC power transmission/distribution system that employs a plurality of load bypass switches according to one embodiment;
Figure 6 illustrates a DC power transmission/distribution system that employs a power supply integrated with the load bypass switch depicted in Figures 2 and 3 according to one embodiment;
Figure 7 illustrates a DC power transmission/distribution system that employs a bypass module yard interconnecting a plurality of load bypass switches according to one embodiment;
Figure 8 illustrates a very low frequency, small AC current generated by the sending end stacked converter station (located on power generation side), to flow through the dc transmission cable over the DC transmission current, causing induction at the remote location e.g. inside the subsea inverter or bypass switch module to generate a power supply, according to one embodiment;
Figure 9 illustrates a bypass-module-yard and closing of one bypass switch in the event of damage to a DC transmission cable, according to one embodiment; and
Figure 10 illustrates a bypass-module-yard topology supporting a star configuration of loads, according to one embodiment.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope of the principles of this invention.

### DETAILED DESCRIPTION

Subsea cables or umbilicals are by far the most expensive components in long distance transmission systems. The embodiments described herein with reference to the Figures are directed to power transmission in the range of Megawatts to subsea loads and subsea energy storage in combination with long distance power transmission in a topology that alleviates the necessity for subsea cables with an excessively large cable cross-section to achieve a constant bus bar voltage when supplying high, short-time subsea control system power.

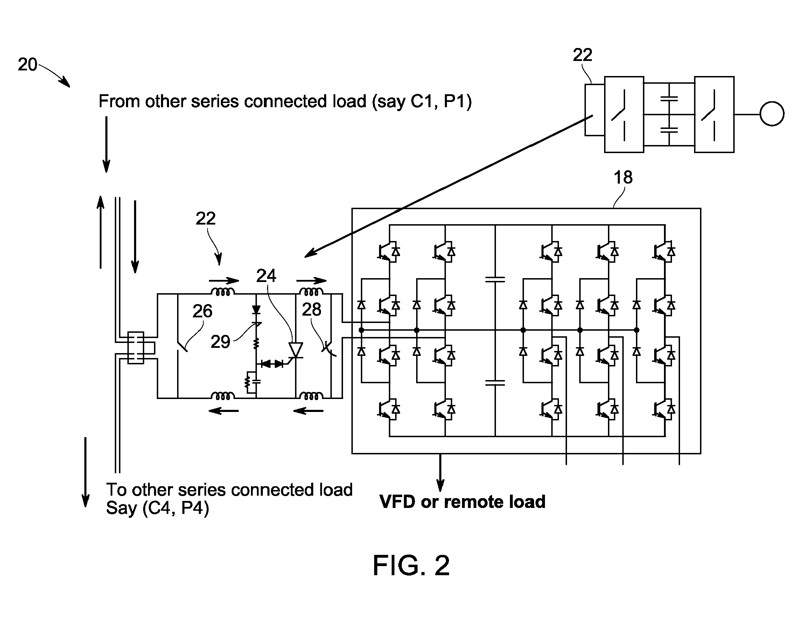

Figure 2 illustrates one portion of a DC power transmission/distribution system 20 that employs a load bypass switch 22 according to one embodiment. The load bypass switch 22 is a hybrid electronic/mechanical switch comprising an SCR 24 in combination with a normally open (NO) mechanical switch 26 and a normally closed (NC) mechanical switch 28. The SCR 24 advantageously comprises a switching reaction time in the microsecond range; while the mechanical switches 26, 28 comprise switching reaction times in the millisecond range greater than five milliseconds.

During operation of the DC power T/D system 20, SCR 24 is triggered instantaneously by a break over diode (BOD) 29 in the event of an open circuit fault on the remote VFD or load 18. The normally closed switch 28 helps in black start operation, described in further detail herein.

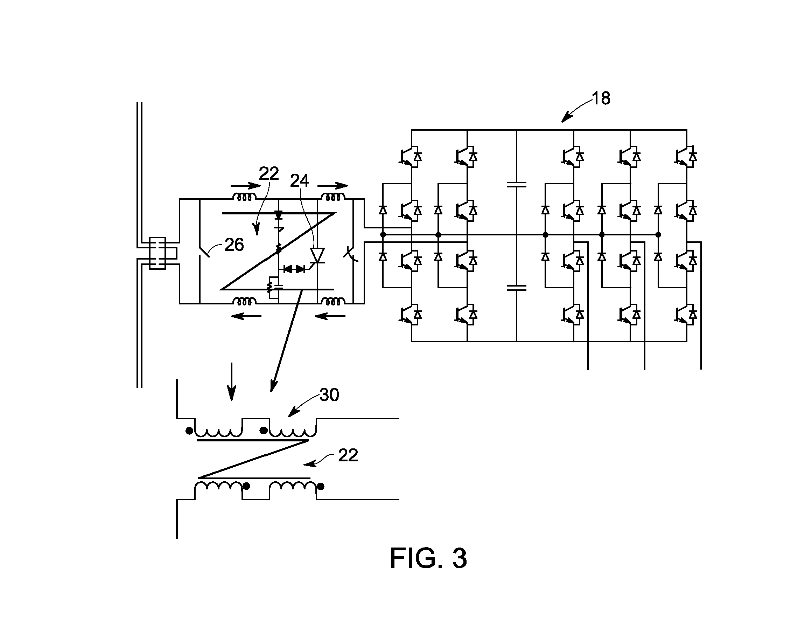

The electronic bypass switch 22 is realized by integrating a thyristor over-voltage protection circuit connected within a coupled DC choke 30, more clearly illustrated in Figure 3. Figure 3 is a simplified diagram illustrating connection of the bypass switch 22 within the coupled DC choke 30 of the VFD 18 depicted in Figure 2. The resultant topology advantageously eliminates the requirement for additional passive components and ensures benign dv/dt and di/dt for the thyristor 24 during bypass operations. The coupled DC choke is preferable; however, a discrete dc choke can also be used.

An open-circuit faulted VFD 18 or load may cause overvoltage across the thyristor 24. The bypass switch 22 functions as an over-voltage protection circuit that is implemented in a different way from a classical over-voltage protection circuit to turn-on the thyristor 24 and hence create a bypass path in just a few microseconds. Subsequent to turn-on of thyristor 24, the normally open mechanical switch 26, without any current braking capability, closes within a few milliseconds to create a more permanent bypass path for the transmission line current.

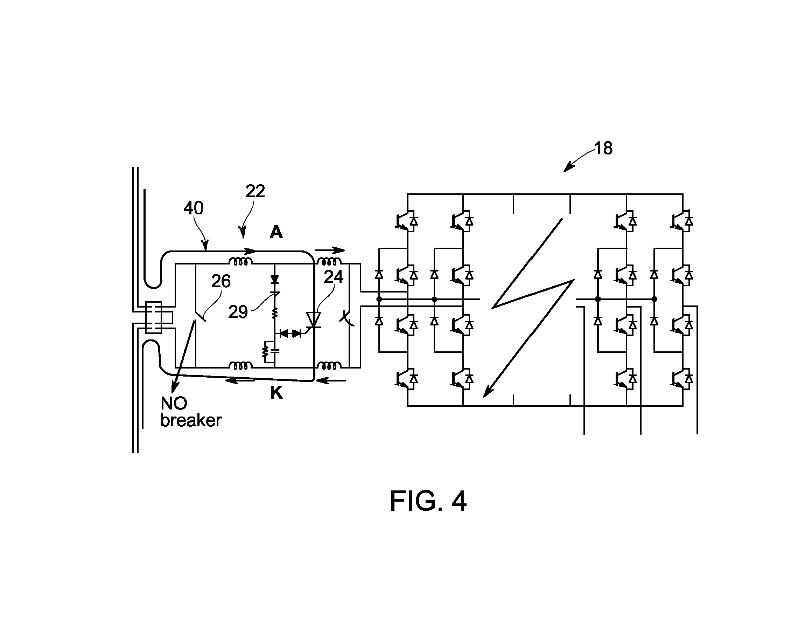

Figure 4 illustrates the switching path 40 resulting during operation of the load bypass switch 22 depicted in Figures 2 and 3. The voltage V_AK rises, and when V_AK > V_BOD, the BOD 29 triggers SCR 24 to provide a continuous path for the transmission line loop current in the event of flashover or any open circuit fault in the VFD or load 18. This switching path event is completed within a microseconds time period that is substantially less than one millisecond. The NO switch 26 is activated subsequent to the establishment of the bypass switching path 40 as stated herein to provide a more permanent continuous path for the transmission line loop current.

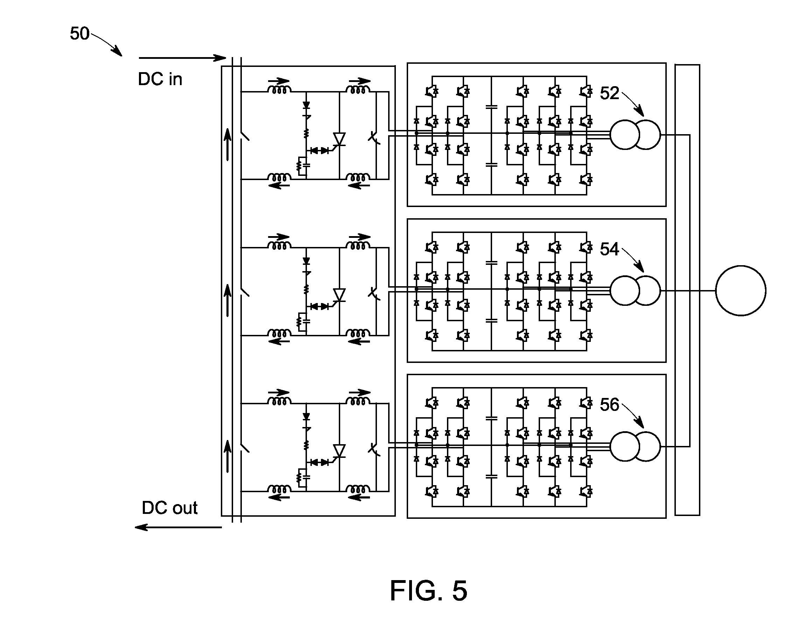

Figure 5 illustrates in more detail, a DC power transmission/distribution system 50 that employs a plurality of load bypass switches 22 according to one embodiment. T/D system 50 can be seen to employ a parallel connected output transformer 52-56 topology.

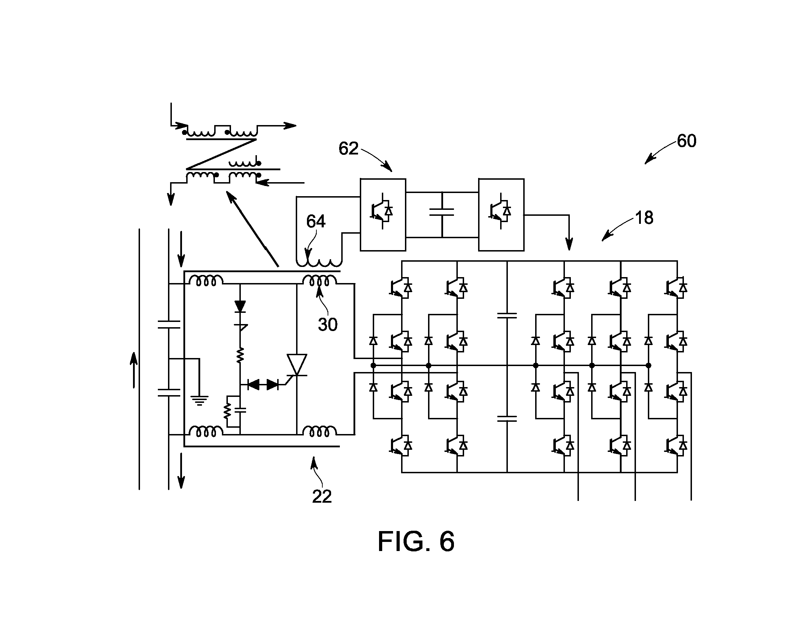

Figure 6 illustrates a DC power transmission/distribution system 60 that employs an auxiliary power supply 62 integrated with the load bypass switch 22 also depicted in Figures 2 and 3 according to one embodiment. The auxiliary power supply 62 supports startup of the VFD/load 18 during a black start event.

Black start of a system/load refers to a situation when startup of a load is required while auxiliary power is not available for the load. A small power, referred to as auxiliary power is required for a control system to start the load at a remote location connected to a power distribution grid.

An uninterruptible power supply (UPS) for energy storage is typically available which provides sufficient auxiliary power for control and accessories to start a remote load connected to a power grid. Some applications where accessing the remote load is very expensive, such as subsea applications where the loads are located up to 3000 meters deep and more than 100 miles away from the shore, may not be serviceable by a UPS due to UPS breakdowns or complete discharge of the UPS.

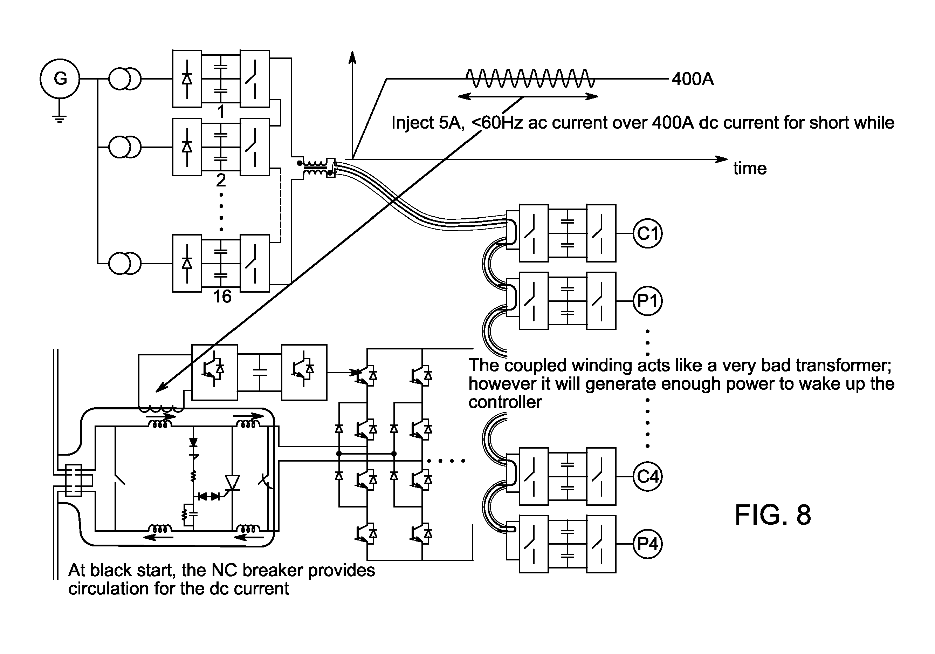

With continued reference to Figure 6, the auxiliary power supply 62 provides an inexpensive mechanism to provide auxiliary power to the VFDs or loads 18 in the absence of a UPS or other inexpensive means of supplying the necessary auxiliary power. The auxiliary power supply 62 comprises at least one additional winding 64 that is wound on a predetermined winding of the existing DC coupled choke 30. The auxiliary power supply 62 operates when a control scheme commands a very low frequency, small AC current to flow over the DC transmission current, causing induction at the remote location, as shown in Fig. 8. This induction generates a small voltage for the auxiliary power supply. During a black start event, the NC breaker 28 provides the necessary circulation for the DC current. The coupled winding 64 acts like a very bad transformer, generating enough power to wake up the load or VFD 18.

In summary explanation, sending low frequency AC current (small amplitude) over DC transmission current (large amplitude) using a DC transmission cable as a medium, and using this low frequency AC current component (very low frequency as compared to 60Hz and therefore requiring low reactive power from the sending end during black start) to generate small control voltage by using an existing DC choke of the subsea inverter is a novel technique for supporting startup of the VFD/load 18 during a black start event.

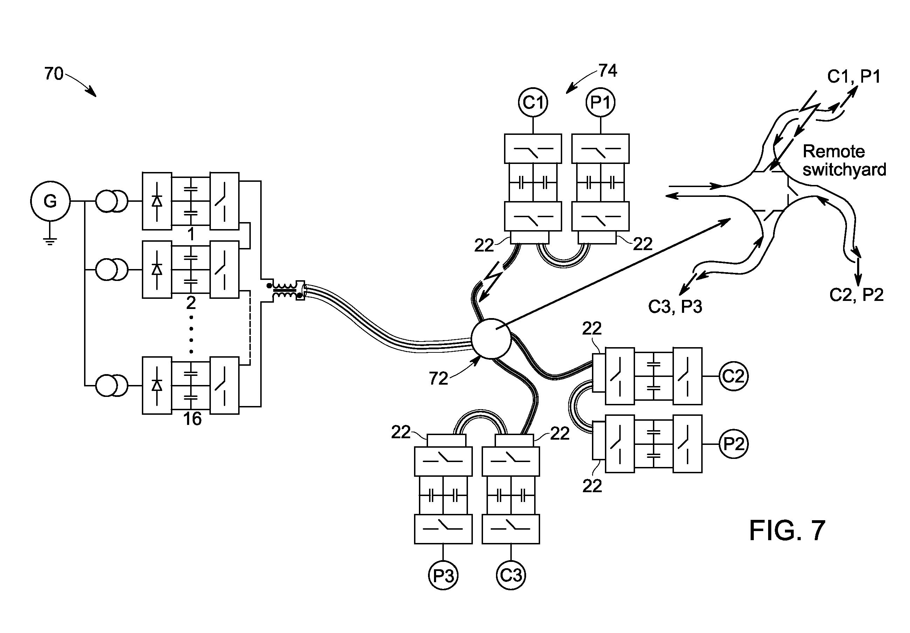

Figure 7 illustrates a DC power transmission/distribution system 70 that employs a remote bypass-module-yard 72 interconnecting a plurality of load bypass switches 22 according to one embodiment. The T/D system 70 shown in Figure 7 illustrates bypassing a load set 74 from the remote bypass-module-yard 72. This embodiment advantageously provides a method to more easily locate faults in the system 70 and also enables continuous power flow to the remote loads upon failure of one or more power distribution cables located remotely in the MSDC system 70.

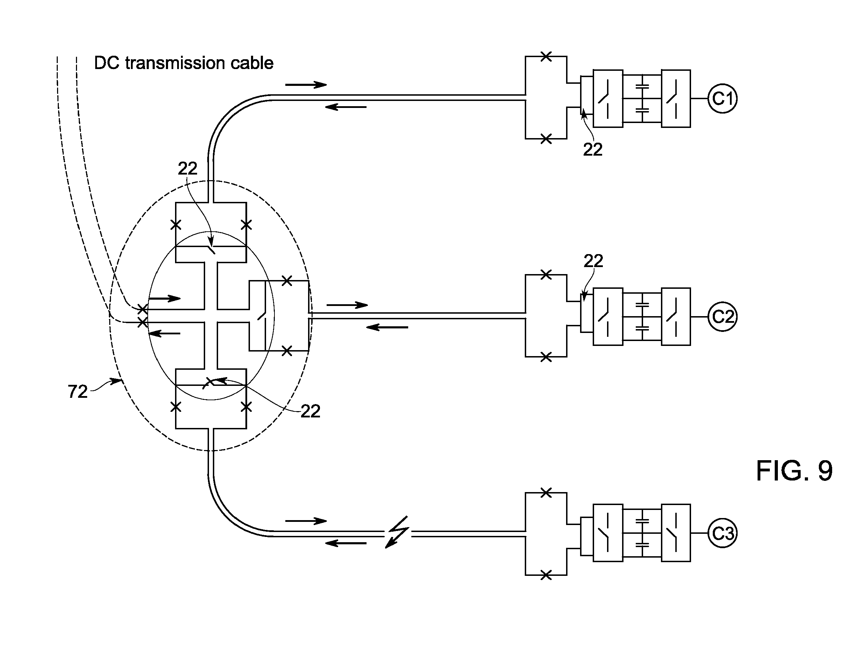

Fig. 9 illustrates a bypass-module-yard and closing of one bypass switch 22 in the event one of the transmission cables is operationally damaged. Additional isolators are also shown which may be used to physically connect/isolate when current is not flowing in the cables. Such applications are typically used for maintenance. It should be noted that in the presence of remote bypass-module-yard 72, the NO switch 26 is redundant since with the help of bypass switches 22 in the bypass-module-yard 72, the faulty remote loads can be permanently bypassed as well.

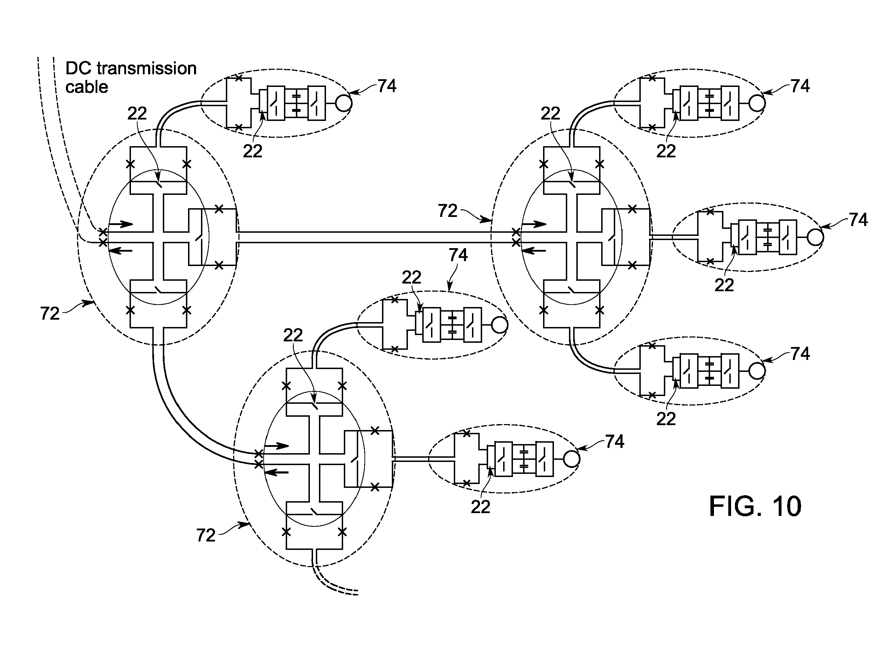

The bypass-module-yard 72 enables star configuration of loads as shown in Fig. 10. The subsea system can stay operational even after serious faults, e. g. an anchor of a ship that completely destroys the distribution system. The bypass-module-yard 72 can always be of the same design (standardized and qualified once for subsea use); and it could have multiple ports (more than actually needed for the specific application) and one or two spare cables connected to these ports. In case of a fault with a subsea distribution cable, the affected MSDC module can be reconnected to one of these spare ports.

In further summary explanation, control methods and system topologies employ a load bypass switch described herein for MSDC applications to enable continuous power flow to viable remote loads, even subsequent to failure of one or more remote loads inside the MSDC system. An inexpensive auxiliary power supply integrated with the load bypass switch enables black start of the MSDC system. A distribution cable layout associated with the load bypass switch enables power flow to the remote loads, even during failure of one or more power distribution cables that feed the remote loads located remotely in the MSDC system. It will be appreciated by those skilled in the relevant art that MSDC is one of many examples of a current-link based DC T/D systems. The principles described herein are applicable to any system where loads are connected in series being supplied through a current source and hence requiring bypassing of loads in the event of faults/intentional load disengagement.

While only certain features of the invention have been illustrated and described herein, many modifications and changes will occur to those skilled in the art. It is, therefore, to be understood that the appended claims are intended to cover all such modifications and changes as fall within the scope of the invention.

Various aspects and embodiments of the present invention are defined by the following numbered clauses:
1. A remote load bypass system comprising:
   a plurality of remote subsea inverter modules connected in series and receiving DC current in response to a DC transmission line current;
   a plurality of load bypass switches, wherein each bypass switch is connected in parallel with a remote module selected from the plurality of remote modules such that each module is associated with a distinct and respective bypass switch, and further wherein each bypass switch provides a bypass path to a corresponding remote module DC current during a fault or intentional bypass associated with the respective remote module, and further wherein each bypass switch comprises:
      a coupled DC-choke or at least one discrete subsea inverter DC-choke; and
      an over-voltage detection/protection circuit integrated within the coupled DC-choke or at least one discrete subsea inverter DC-choke.
2. The remote load bypass system according to clause 1, further comprising a modular stacked DC current source configured to generate the DC current.
3. The remote load bypass system according to any preceding clause, wherein the plurality of remote modules are configured via a modular stacked DC topology.
4. The remote load bypass system according to any preceding clause, further comprising a high voltage DC current source configured to generate the DC current.
5. The remote load bypass system according to any preceding clause, wherein each bypass switch further comprises a break over diode configured to trigger a respective thyristor subsequent to an open circuit fault for a corresponding remote module.
6. The remote load bypass system according to any preceding clause, wherein the bypass switch triggers the respective thyristor within microseconds and substantially less than one millisecond of the open circuit fault.
7. The remote load bypass system according to any preceding clause, wherein each bypass switch further comprises a normally open (NO) mechanical switch configured to close subsequent to triggering of the respective thyristor.
8. The remote load bypass system according to any preceding clause, wherein the bypass switch closes the NO mechanical switch within milliseconds and subsequent to triggering of the respective thyristor.
9. The remote load bypass system according to any preceding clause, wherein each bypass switch further comprises a normally closed (NC) mechanical switch configured to provide circulation of DC current to a respective remote module during a black start event.
10. The remote load bypass system according to any preceding clause, further comprising an auxiliary winding coupled to a predetermined winding of the coupled DC choke or at least one discrete choke, wherein the auxiliary winding generates and supplies an AC current to the respective remote module in response to the circulated DC current during the black start event.
11. The remote load bypass system according to any preceding clause, wherein the AC current is generated at a frequency substantially less than 60 Hz and flows over the circulated DC current.
12. The remote load bypass system according to any preceding clause, further comprising a remote cable bypass-module-yard configured to bypass a predetermined set of remote modules isolated from the remaining remote modules by a distribution cable fault or in preparation for maintenance of selected remote modules.
13. The remote load bypass system according to any preceding clause, wherein at least one remote module comprises a variable frequency drive.
14. A remote load bypass switch comprising:
   at least one of a DC-choke coupling a DC source current to one or more remote subsea inverter modules or at least one remote subsea inverter module discrete DC-choke coupling the DC current source to one or more remote subsea inverter modules; and
   a thyristor or over-voltage detection/protection circuit integrated within and connected to the coupled DC-choke or at least one inverter discrete DC-choke, wherein the coupled DC-choke or at least one inverter discrete DC-choke and thyristor or over-voltage detection/protection circuit together are configured to provide a bypass current path to a remote module subsequent to a remote module fault or in response to an intentional bypass command.
15. The remote load bypass switch according to any preceding clause, wherein at least one remote module comprises a remote load or variable frequency drive.
16. The remote load bypass switch according to any preceding clause, further comprising a break over diode configured to trigger a thyristor subsequent to an open circuit fault for a corresponding remote module such that the triggered thyristor forms one portion of the bypass current path.
17. The remote load bypass switch according to any preceding clause, wherein the bypass current path is formed within microseconds and substantially less than one millisecond of the open circuit fault.
18. The remote load bypass switch according to any preceding clause, further comprising a normally open (NO) mechanical switch coupled to the thyristor by the coupled DC-choke or inverter discrete choke and providing a circulation path of DC current to the remote module subsequent to triggering of the thyristor.
19. The remote load bypass switch according to any preceding clause, wherein the NO mechanical switch closes within milliseconds and subsequent to triggering of the thyristor.
20. The remote load bypass switch according to any preceding clause, further comprising a normally closed (NC) mechanical switch coupled to the thyristor by the coupled DC-choke or inverter discrete DC-choke and providing a circulation path of DC current to one or more remote modules during a black start event.
21. The remote load bypass switch according to any preceding clause, further comprising an auxiliary winding coupled to a predetermined winding of the coupled DC-choke or inverter discrete DC-choke, wherein the auxiliary winding generates and supplies an AC current to at least one remote module in response to circulated DC current via the NC mechanical switch during the black start event.
22. The remote load bypass switch according to any preceding clause, wherein the AC current is generated at a frequency substantially less than 60 Hz and flows over the circulated DC current.
23. The remote load bypass switch according to any preceding clause, further comprising a remote cable bypass-module-yard providing a bypass path to a predetermined subset of remote modules isolated from a set of remote modules when the remote load bypass switch provides a bypass current path to a plurality of remote modules subsequent to a remote module open circuit fault or a load fault.
24. The remote load bypass switch according to any preceding clause, wherein the set of remote modules are configured in a star topology.
25. The remote load bypass switch according to any preceding clause, wherein the subset of remote modules are configured in a star topology.

## Claims

1. A remote load bypass system (20) comprising:
a plurality of remote subsea inverter modules connected in series and receiving DC current in response to a DC transmission line current;
a plurality of load bypass switches (22), wherein each bypass switch is connected in parallel with a remote module selected from the plurality of remote modules such that each module is associated with a distinct and respective bypass switch, and further wherein each bypass switch provides a bypass path to a corresponding remote module DC current during a fault or intentional bypass associated with the respective remote module, and further wherein each bypass switch comprises:
a coupled DC-choke (30) or at least one discrete subsea inverter DC-choke; and
an over-voltage detection/protection circuit integrated within the coupled DC-choke (30) or at least one discrete subsea inverter DC-choke.

2. The remote load bypass system (20) according to claim 1, further comprising a modular stacked DC current source configured to generate the DC current.

3. The remote load bypass system (20) according to either of claim 1 or 2, wherein the plurality of remote modules are configured via a modular stacked DC topology.

4. The remote load bypass system (20) according to any of the preceding claims, further comprising a high voltage DC current source configured to generate the DC current.

5. The remote load bypass system according to any of the preceding claims, wherein each bypass switch (22) further comprises a break over diode (29) configured to trigger a respective thyristor (24) subsequent to an open circuit fault for a corresponding remote module.

6. The remote load bypass system according to claim 5, wherein the bypass switch (22) triggers the respective thyristor (24) within substantially less than one millisecond of the open circuit fault.

7. The remote load bypass system according to claim 6, wherein each bypass switch (22) further comprises a normally open (NO) mechanical switch (26) configured to close subsequent to triggering of the respective thyristor (24).

8. The remote load bypass system (20) according to any of the preceding claims, wherein each bypass switch (22) further comprises a normally closed (NC) mechanical switch (28) configured to provide circulation of DC current to a respective remote module during a black start event.

9. The remote load bypass system according to claim 8, further comprising an auxiliary winding coupled to a predetermined winding (64) of the coupled DC choke (30) or at least one discrete choke, wherein the auxiliary winding generates and supplies an AC current to the respective remote module in response to the circulated DC current during the black start event.

10. The remote load bypass system according to claim 9, wherein the AC current is generated at a frequency substantially less than 60 Hz and flows over the circulated DC current.

11. The remote load bypass system (70) according to any of the preceding claims, further comprising a remote cable bypass-module-yard (72) configured to bypass a predetermined set of remote modules isolated from the remaining remote modules by a distribution cable fault or in preparation for maintenance of selected remote modules.

12. The remote load bypass system according to any of the preceding claims, wherein at least one remote module comprises a variable frequency drive (18).

13. A remote load bypass switch (22) comprising:
at least one of a DC-choke (30) coupling a DC source current to one or more remote subsea inverter modules or at least one remote subsea inverter module discrete DC-choke coupling the DC current source to one or more remote subsea inverter modules; and
a thyristor or over-voltage detection/protection circuit integrated within and connected to the coupled DC-choke (30) or at least one inverter discrete DC-choke, wherein the coupled DC-choke or at least one inverter discrete DC-choke and thyristor or over-voltage detection/protection circuit together are configured to provide a bypass current path to a remote module subsequent to a remote module fault or in response to an intentional bypass command.

14. The remote load bypass switch according to claim 13, wherein at least one remote module comprises a remote load or variable frequency drive.

15. The remote load bypass switch according to either of claim 13 or 14, further comprising a break over diode (29) configured to trigger a thyristor (24) subsequent to an open circuit fault for a corresponding remote module such that the triggered thyristor forms one portion of the bypass current path.
